# EUROPÄISCHE PATENTSCHRIFT

(11) **EP 0 353 282 B1**
(45) Veröffentlichungstag und Bekanntmachung des Hinweises auf die Patenterteilung: **27.01.1993**
(21) Anmeldenummer: 89902241.2
(22) Anmeldetag: 27.01.1989
(51) Int. Cl.: G01F 11/02

(54) **VORRICHTUNG ZUM AUSGEBEN EINER DOSIERTEN MENGE VON FLIESSFÄHIGEM GUT, INSBESONDERE FLÜSSIGEM MEDIKAMENT AUS EINEM BEHÄLTER**
DEVICE FOR DISPENSING DOSES OF FREE-FLOWING MATERIALS, IN PARTICULAR FLUID MEDICAMENTS, FROM A CONTAINER
DISTRIBUTEUR-DOSEUR DE FLUIDES, NOTAMMENT DE MEDICAMENTS FLUIDES CONTENUS DANS DES RECIPIENTS

(30) Priorität: 05.02.1988 DE 3803366
(43) Veröffentlichungstag der Anmeldung: 07.02.1990
(73) Patentinhaber: Deussen Kunststofftechnik Inhaber Heino Deussen, D-65343 Eltville (DE)
(72) Erfinder: DEUSSEN, Heino, D-6228 Eltville am Rhein 2 (DE)
(74) Vertreter: Fuchs Mehler Weiss
(86) Internationale Anmeldenummer: EP8900039
(87) Internationale Veröffentlichungsnummer: WO8907244

(56) Entgegenhaltungen:
- EP-A- 0 010 963
- DE-A- 3 122 330
- DE-A- 3 238 379
- FR-A- 2 314 110
- FR-A- 2 562 444

## Beschreibung

Die Erfindung betrifft eine Vorrichtung zum Ausgeben einer dosierten Menge von fliesfähigem Gut, insbesondere flüssigem Medikament aus einem Behälter, die zugleich einen am Behälterauslaß angebrachten oder anbringbaren Behälterverschluß bildet und in Art einer Dosierpumpe mit einer Dosierkammer, die eine nach dem Behälterinneren offene Stirnseite aufweist, mit einem an seinem Umfang abgedichtet in der Dosierkammer und aus deren offener Stirnseite heraus bis in das Behälterinnere bewegbaren Kolben und mit einer sich von außen über eine Kolbenstange zum Kolben erstreckenden Betätigungseinrichtung zum Bewegen des Kolbens ausgebildet ist, wobei der Auslaßkanal für das dosiert auszugebende Gut an seiner Einmündung am Boden der Dosierkammer einen Durchlaß für die Kolbenstange bildet und wobei Teile der Kolbenstange eine Verschlußeinrichtung bilden, die den Auslaßkanal schließt, wenn der Kolben die Dosierkammer verläßt und öffnet, wenn der Kolben wieder in die Dosierkammer eintritt.

Bei Vorrichtungen dieser Art, insbesondere einer aus EP 10963 B1 bekannten Dosierpumpe, ist die Anordnung des Kolbens und der Betätigungseinrichtung derart getroffen, daß sich der Kolben in Ruhestellung aus dem offenen stirnseitigen Ende der Pumpen- und Dosierkammer heraus bis in den Innenraum des Behälters erstreckt. Auf diese Weise soll erreicht werden, daß die Pumpen- und Dosierkammer schnell und vollständig mit auszugebendem Gut gefüllt ist und bei Betätigung die Vorrichtung sofort mit der Ausgabe des Gutes beginnt. Dieser Vorteil läßt sich aber nur bei fest angebrachten Vorrichtungen erreichen, wenn diese mit dem Auslaßkanal der Pumpen- und Dosierkammer nach unten angeordnet sind. Handelt es sich um frei in der Tasche mitzunehmende Behälter, wie dies bei Medikamentenbehältern durchweg der Fall ist, so kann nicht vorausgesetzt werden, daß in Ruhelage, d.h. bei aus der Pumpen- und Dosierkammer herausbewegtem Kolben die Pumpen- und Dosierkammer wirklich mit auszugebendem Gut gefüllt ist oder ob dort Luft vorhanden ist. Selbst wenn der Behälter vor Betätigung der Ausgabevorrichtung mit seinem Auslaß nach unten gerichtet wird, bleibt bei diesen bekannten Verschluß- und Ausgabevorrichtungen noch eine mehr oder weniger große Luftmenge in der Pumpen- und Dosierkammer und am Kolben zurück, so daß die Dosiergenauigkeit dieser bekannten Vorrichtungen stark beeinträchtigt ist. Ferner sind die bekannten Vorrichtungen in dieser Art in ihrem Aufbau mehr oder weniger aufwendig, so daß sie nicht als Massenartikel in Betracht kommen.

Bei einer aus FR-A-2 314 110 bekannten Vorrichtung der eingangs beschriebenen Art ist ebenfalls ein plattenförmiger Kolben vorgesehen, der mit einer Feder in Schließstellung in der Dosierkammer gehalten wird, und zwar in Anlage auf einen Dichtungsring. Öffnet sich die Dosierkammer bei Betätigung, d.h. Herausschiebens des Kolbens nach dem Behälterinneren, dann wird gleichzeitig ein Flüssigkeitsaustritt vom Behälter nach außen nur durch die auf der Betätigungsfläche befindliche Handfläche, die den durch die Betätigungsfläche hindurchführenden Auslaßkanal abdichtet, verhindert.

Gegenüber den bekannten Vorrichtungen der oben genannten Art ist es Aufgabe der Erfidung, eine Verschluß- und Ausgabevorrichtung in Art einer Dosierpumpe mit verbesserter technischer Funktion zu schaffen, die zugleich dazu ausgebildet ist, daß sie als Massenartikel zu geringen Erstehungskosten herstellbar ist.

Diese Aufgabe wird erfindungsgemäß dadurch gelöst, daß die dem Boden der Dosierkammer zugewandte Stirnfläche des Kolbenkörpers der Mantelfläche eines Kegelstumpfes mit einem Kegelwinkel (α) in der Größenordnung von 90° entspricht, der sich nach dem Boden der Dosierkammer hin verjüngt bis seine Querschnittsfläche mit der der Kolbenstange zusammenfällt, während die Bodenfläche der Dosierkammer zur Stirnfläche des Kolbenkörpers abdichtend zusammenpassende Konizität aufweist und mittig zur Einmündung des Auslaßkanals führt, wobei diese Einmündung des Auslaßkanals eine größere Querschnittsfläche als die Kolbenstange im Bereich der Kolbenstirnfläche aufweist, daß die Betätigungseinrichtung eine Rückstellfeder enthält, die den Kolben bei Nichtbetätigung in eine Ruheposition innerhalb der Dosierkammer zieht, bei der die konische Stirnfläche des Kolbens und die Bodenfläche der Dosierkammer in dichtendem Eingriff aufeinander liegen und, daß die Betätigungseinrichtung dazu ausgebildet ist, den Kolbenkörper zum Öffnen der Dosierkammer zum Behälterinneren im wesentlichen um die Höhe des mit seiner dem Boden der Dosierkammer zugewandten Stirnfläche gebildeten Kegelstumpfes aus der offenen Stirnseite der Dosierkammer heraus zu bewegen.

Durch die Erfindung wird erreicht, daß der Kolben in Ruhestellung der Vorrichtung ein Abdichtungselement innerhalb der Dosierkammer bildet, so daß in jeglicher Lage des mit einer Verschluß- und Ausgabevorrichtung gemäß der Erfindung ausgestatteten Behälters die Dosierkammer stets nach dem Behälteräußeren abgedichtet ist, so daß keine Luft aus dem Inneren eines nur teilweise gefüllten Behälters an die wirksame Stirnfläche des Kolbens innerhalb der Dosierkammer gelangen kann. Beim Bewegen des Kolbens von der Ruhestellung in seine rückwärtige Dosier-Ausgangsstellung wird zwar Luft von außen angesaugt. Hierdurch werden aber in Ausgangskanal enthaltene Gutreste in die Dosierkammer zurückgesaugt, wobei auch Luft vom Auslaßkanal in die Dosierkammer gesaugt werden kann, um den Auslaßkanal für den folgenden Dosiervorgang sicher freizulegen. Sobald der Kolben aus der offenen Seite der Dosierkammer herausbewegt ist, wird diese angesaugte Luft durch die kegelstumpfförmige Stirnfläche des Kolbens sofort wirksam aus dem Inneren der Dosierkammer herausgeleitet, wobei die kegelstumpfförmige Stirnfläche des Kolbens keinerlei Anlaß dafür gibt, daß die Luft dort haften könnte. Sobald der Kolben an seine aus der offenen Seite der Dosierkammer herausragenden Stellung gebracht worden ist, befindet sich auch keine Luft mehr in dem Bereich der Dosierkammer. Das mit dem Zurückbewegen und Wiedereintreten des Kolbens in die Dosierkammer einsetzende Dosieren und Ausgeben von fliesfähigem Gut wird dadurch mit hoher Genauigkeit ausgeführt. Durch die Rückstellfeder und deren Einsatz zum Heranziehen des Kolbens an den Boden der Dosierkammer wird der funktionelle Vorteil erzielt, daß der Kolben durch Federwirkung in der in die Dosierkammer eingezogenen Schließstellung gehalten wird. Dadurch eignet sich die erfindungsgemäße Vorrichtung besonders als Verschluß für Behälter jeglicher Art, insbesondere Arzneimittelbehälter, die in jeglicher Stellung, beispielsweise beim Mitführen oder Aufbewahren in Tasche, ebenso sicher wie auch bei aufgestellter Stellung dicht verschlossen sein müssen. Die konisch vertiefte, trichterförmige Ausbildung der zum Auslaßkanal führenden Bodenfläche der Dosierkammer verbessert die dichtende Anlage der Kolben-Stirnfläche in dessen Ruhestellung am Boden der Dosierkammer. Bei bis auf den Boden der Dosierkammer eingezogenem Kolben besteht kein Restvolumen mehr vor der Kolbenstirnfläche in der Dosierkammer. Es wird also das auszugebende Gut mittels des Kolbens restlos aus der Dosierkammer herausgedrückt. Es können sich auch bei vollständig eingezogenem Kolben keine Luftblasen zwischen der Stirnfläche des Kolbens und der Bodenfläche der Dosierkammer bilden.

Als besonders vorteilhaft hat sich das Erfindungsgemäße Merkmal herausgestellt, die Betätigungseinrichtung für den Kolben dazu auszubilden, den Kolbenkörper zum Öffnen der Dosierkammer zum Behälterinneren im wesentlichen um die Höhe des mit seiner den Boden der Dosierkammer zugewandten Stirnfläche gebildeten Kegelstumpfes aus der offenen Stirnseite der Dosierkammer heraus zu bewegen. Hierdurch wird die offene Stirnfläche der Dosierkammer (abgesehen von der Querschnittsfläche der Kolbenstange) vollständig für das Einlaufen des zu dosierenden Behälterinhalts freigegeben, vor allem aber für das Abströmen der in der Dosierkammer vorhandenen Luft.

Ferner hat es sich als besonders vorteilhaft herausgestellt, die kegelstumpfförmige Stirnfläche des Kolbens mit einem Kegelwinkel in der Größe von 90° auszubilden.

Eine besonders einfache, aber dabei stabile Ausbildung des Kolbens mit sicherer Dichtungsführung des Kolbenrandes an der Umfangsfläche der Dosierkammer wird im Rahmen der Erfindung dadurch erreicht, daß der Kolben in Art eines Hohlkolbens mit kegelstumpfförmiger Stirnwand und sich an deren Außenumfang nach hinten anschließendem, zylindrischem Kolbenring ausgebildet ist.

Die sichere Abdichtung mit betriebssicherer Steuerung der Ventilwirkung der erfindungsgemäßen Vorrichtung läßt sich dadurch wesentlich verbessern, daß der Auslaßkanal in seinem die Kolbenstange konzentrisch umgebenen Einmündungsabschnitt zur Dosierkammer mit einer Verengung ausgebildet ist, während die Kolbenstange in einem solchen Abstand vom Kolbenkörper (Stirnwand) mit einer in die Verengung abdichtend passenden Verdickung versehen ist, daß beim Bewegen des Kolbens aus der offenen Stirnseite der Dosierkammer heraus sich diese Verdickung in die Verengung des Auslaßkanals hineinbewegt.

Ferner läßt sich im Rahmen der Erfindung eine wesentliche Verbesserung der Abdichtung des Auslaßkanals dadurch erreichen, daß ein Pumpengehäuse vorgesehen ist, das innerhalb eines rohrförmigen Teiles (Führungsröhrchen) die Kolbenstange abdichtend führt und einen sich an eine Verengung im Einmündungsbereich zur Dosierkammer anschließenden und die Kolbenstange ringförmig umgebenden, inneren Abschnitt des Auslaßkanals mit Abdichtung nach außen enthält, wobei die Kolbenstange zur Bildung eines äußeren Abschnittes des Auslaßkanals mit einer nach außen offenen zentralen Bohrung ausgebildet ist, sowie an ihrer mit der Verengung des Auslaßkanals zusammenwirkenden Verdickung eine den inneren Abschnitt und den äußeren Abschnitt des Auslaßkanals miteinander verbindene Querbohrung aufweist, derart, daß diese Querbohrung bei nach dem Behälterinneren geöffneter Dosierkammer und in die Verengung des Auslaßkanals eingeführter Verdickung der Kolbenstange verschlossen ist.

Dabei bietet sich als besonders vorteilhafte Weiterbildung die Möglichkeit an, daß die Abdichtung der Kolbenstange und des inneren Abschnittes des Auslaßkanals nach außen durch eine zweite Verdickung oder durch einen an die Kolbenstange angeformten äußeren Ringbund gebildet ist.

Eine andere Verbesserungsmöglichkeit der abgedichteten Führung der Kolbenstange im Pumpengehäuse bietet sich dahingehend, daß der rohrförmige Teil (Führungsröhrchen) des Pumpengehäuses aus nachgiebigem Kunststoff besteht und als Abdichtung der Kolbenstange des inneren Abschnittes des Auslaßkanals an seinem freien Ende einen auf die Außenfläche der Kolbenstange greifenden inneren Dichtungsbund aufweist.

Als besonders vorteilhafte Ausführungsform der Erfindung ist ein die Dosierkammer und einen die Kolbenstange abdichtend führenden Abschnitt des Auslaßkanals aufnehmendes Pumpengehäuse vorgesehen, wobei die Betätigungseinrichtung zum Bewegen des Kolbens ein auf der Kolbenstange vorgesehenes Betätigungselement und eine zwischen diesem Betätigungselement und dem Pumpengehäuse eingesetzte, die Kolbenstange axial aus dem Pumpengehäuse herausziehende Schrauben-Druckfeder als Rückhohlfeder enthält. Dabei können am Pumpengehäuse und an der Kolbenstange teleskopisch zueinander geführte Abdeckwände vorgesehen sein, inneihalb derer die Rückstellfeder in einem ringförmigem Zwischenraum eingesetzt ist. Die eine Abdeckwand kann bei einstückig an das an der Kolbenstange vorgesehene Betätigungselement und die andere Abdeckwand einstückig an das Pumpengehäuse angeformt sein.

Die Ausbildung des Betätigungselementes kann im Rahmen der Erfindung den jeweiligen Wünschen und Erfordernissen angepaßt sein. Beispielsweise kann die Betätigungseinrichtung ein am freien Ende der Kolbenstange angebrachtes, plattenförmiges Betätigungselement aufweisen, über das hinaus ein Ausgaberöhrchen in Verlängerung der Kolbenstange axial vorsteht. In einem anderen Beispiel, bei welchem die Abgabe von Behälterinhalt schräg nach unten erwünscht ist, kann die Betätigungseinrichtung zum Bewegung des Kolbens einen am freien Ende der Kolbenstange angebrachten Fingerauflagekopf als Betätigungselement aufweisen, in welchem ein schräg gestellter Endabschnitt des Auslaßkanals gebildet ist.

Die erfindungsgemäße Vorrichtung eignet sich aufgrund ihrer einfachen Ausbildungsmöglichkeit besonders für billige Herstellung als Massenartikel. Hierzu kann beispielsweise ein Aufbau aus drei spritzgegossenen Kunststoffteilen und einer Rückstellfeder, beispielsweise aus Stahl, vorgesehen sein,
nämlich:
einem Pumpengehäuse mit angeformter Dosierkammer sowie angeformtem Führungsröhrchen,
einer Kolbenstange mit angeformtem Betätigungselement und
einem an die Kolbenstange anzusetzenden Kolbenkörper,
wobei die Rückstellfeder eine Schrauben-Druckfeder und zwischen dem Pumpengehäuse und dem Betätigungselement einzusetzen ist.

Ausführungsbeispiele der Erfindung werden im folgenden anhand der Zeichnung näher erläutert. Es zeigen:
Fig. 1 eine bevorzugte Ausführungsform der erfindungsgemäßen Vorrichtung in Ruhestellung in axialem Schnitt;
Fig. 2 die Vorrichtung gemäß Figur 1 in Ausgabe- und Dosier-Bereitschaftsstellung, axial geschnitten;
Fig. 3 eine zweite Ausführungsform der erfindungsgemäßen Vorrichtung in Ausgabe- und Dosier-Bereitschaftsstellung, axial geschnitten;
Fig. 4 das an der Kolbenstange vorgesehene Betätigungselement einer dritten Ausführungsform der erfindungsgemäßen Vorrichtung in axialem Schnitt und
Fig. 5 die bei allen dargestellten Ausführungsformen vorgesehene Dichtungseinrichtung im Gewindeteil in vergrößerter axialer Schnittdarstellung.

Bei den in der Zeichnung dargestellten Ausführungsformen der Vorrichtung zum Ausgeben einer dosierten Menge von fließfähigem Gut, insbesondere flüssigem Medikament, aus einem (nicht dargestellten) Behälter, handelt es sich um einen Behälterverschluß in Art einer Dosierpumpe 10, die eine Pumpen- und Dosierkammer 12 mit darin axial verschiebbaren Kolben 13 aufweist. Der Kolben 13 ist in Art eines Hohlkolbens ausgebildet und weist eine kegelstumpfförmige Stirnwand 20 mit kegelstumpfförmiger vorderer Stirnfläche 20a auf, die einen Kegelwinkel α von beispielsweise 90° aufweisen kann.

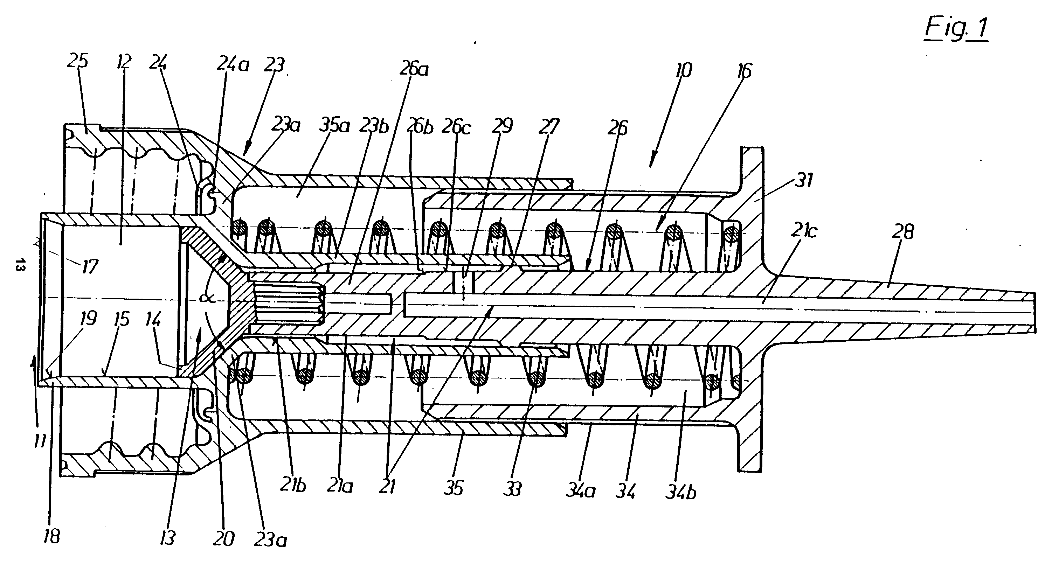

An diese Stirnwand 20 schließt sich am rückwärtigen Umfangsrand ein Wandungsteil in Art eines zylindrischen Kolbenringes 14 an, der in dichtenden Eingriff auf die innere Umfangsfläche 15 der Pumpen- und Dosierkammer 12 greift, solange sich der Kolben 13 innerhalb der Pumpen- und Dosierkammer 12 befindet. In der in Figur 1 dargestellten Ruhe- und Abdichtungstellung liegt die vordere Stirnfläche 20a des Kolbens 13 in dichtendem Eingriff in der dazu passenden und in den mittig angeordneten Auslaßkanal 21 führenden konischen Bodenfläche 22a an der inneren Stirnwand 22 der Pumpen- und Dosierkammer 12.

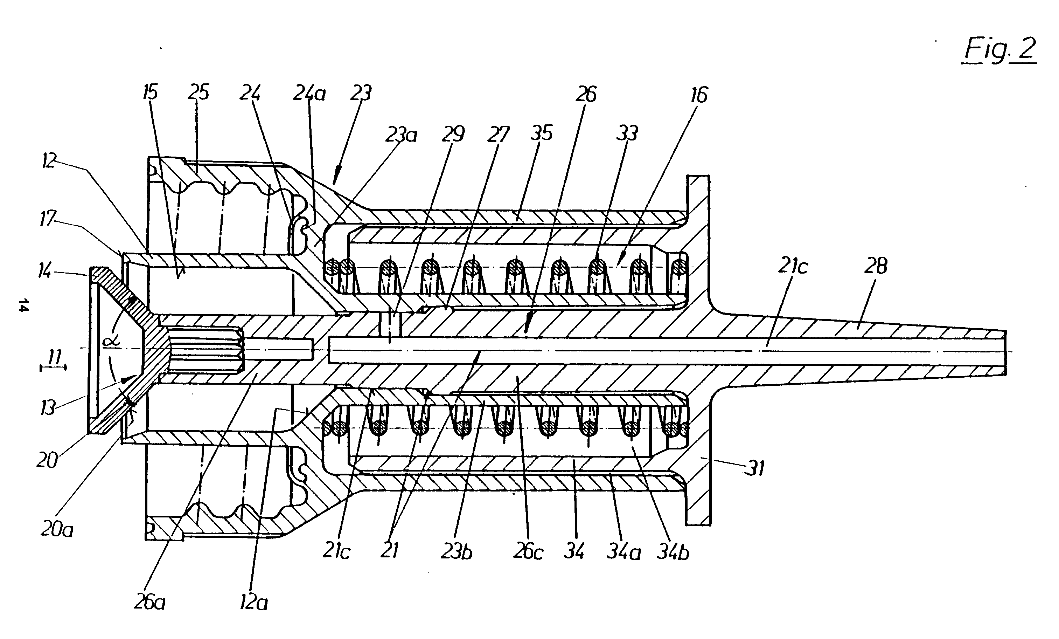

Wie aus Figur 2 ersichtlich, läßt sich durch Eindrücken der Kolbenstange 26 mittels des an ihr vorgesehenen Betätigungselementes 31 der Kolben 13 axial bis aus der offenen Stirnseite 17 der Pumpen- und Dosierkammer 12 heraus in das mit 11 angedeutete Behälterinnere verschieben. Dementsprechend weist die Umfangswand der Pumpen- und Dosierkammer 12 nach dem Behälterinneren 11 hin lediglich einen Stirnrand 18 auf, an dem ein ringförmiger, nach außen konisch aufgeweiterer Innenflächenbereich 19 gebildet ist.

Wie der Vergleich von Figur 1 und,Figur 2 zeigt, bildet der Kolben 13 in der in Figur 1 gezeigten Ruhestellung ein sicheres Abdichtelement für die Dosierpumpe 10 und damit für den Behälter, auf den diese Dosierpumpe 10 gesetzt ist. Dies wird insbesondere durch die Zusammenwirkung des auf die innere Umfangsfläche 15 der Pumpen- und Dosierkammer 12 greifenden Kolbenring 14 mit der gegenseitigen abdichtenden Anlage der konischen Flächen an der Stirnfläche 20a des Kolbens 13 und der konischen Bodenfläche 22a der Stirnwand 22 der Pumpen- und Dosierkammer 12 erreicht.

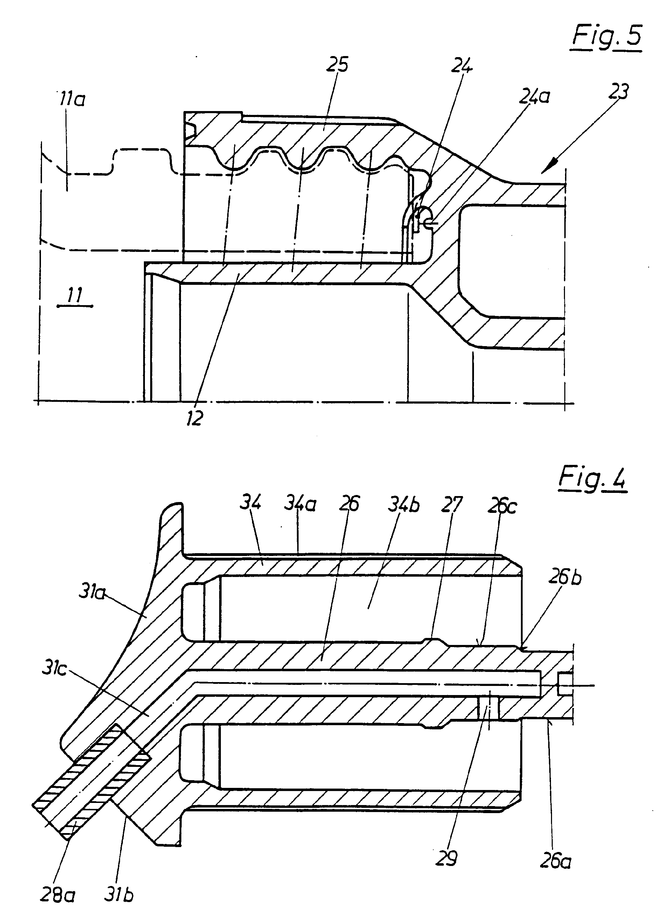

An der dem bei 11 angedeuteten Behälterinneren abgewandten Seite schließt sich an die Pumpen- und Dosierkammer 12 das die Betätigungseinrichtung 16 für den Kolben und den Auslaßkanal 21 aufnehmende Pumpengehäuse 23 an. Das Pumpengehäuse 23 ist mittels eines an ihm koaxial zur Umfangswand der Pumpen- und Dosierkammer 12 angeformten Schraubringes 25 auf ein an der Auslaßöffnung des jeweiligen Behälters, beispielsweise einer Arzneimittelflasche, ausgebildetes Gewinde 11a aufzuschrauben, bis sich der innerhalb des Schraubringes 25 geformte, die Umfangswand der Pumpen- und Dosierkammer umgebende Dichtungslippe 24 gegen die Stirnfläche dieser Auslaßöffnung legt und mittels eines hinter der Dichtungslippe 24 gebildeten Anpreßringes 24a fest und abdichtend gegen die Stirnfläche der Auslaßöffnung am Behälter gedrückt wird, wie dies in Fig. 5 gestrichelt angedeutet ist.
Am Pumpengehäuse ist eine den Schraubring 25 und die Pumpen- und Dosierkammer 12 einstückig miteinander verbindender ringförmiger Zwischenboden 23a gebildet, der an seiner der Pumpen- und Dosierkammer 12 entgegengesetzten Seite ein Führungsröhrchen 23b trägt. Dieses Führunsröhrchen 23b bildet in seinem Inneren einen axial und mittig zur Pumpen- und Dosierkammer 12 angeordneten Auslaßkanal 21, in welchem die zur Betätigungseinrichtung 16 des Kolbens 13 gehörende Kolbenstange 26 angeordnet ist. Dabei ist zwischen der Umfangsfläche der Kolbenstange 26 und der sie aufnehmenden Bohrung des Führungsröhrchens 23b ein kammerartig aufgeweitet ausgebildeter Teil 21a des Auslaßkanals gebildet, der über eine Verengung 21b in die Pumpen- und Dosierkammer 12 übergeht, so daß die Pumpen- und Dosierkammer 12 mit ihrer konischen Bodenfläche 22a einen trichterförmigen Übergang zu dem kammerartig aufgeweiteten Teil 21a des Auslaßkanals 21 bildet.

An dem der Pumpen- und Dosierkammer 12 abgewandten Ende ist dieser kammerartig aufgeweitete Teil 21a des Auslaßkanals 21 durch einen an die Kolbenstange 26 angeformten, gegenüber deren Umfangsfläche vorstehenden Dichtungsbund 27 verschlossen. Da die Kolbenstange 26 aus nachgiebigem weichem Kunststoff hergestellt ist, greift dieser Dichtungsbund 27 abdichtend auf die Innenfläche des Führungsröhrchens 23b. Der äußere und nach außen offene Teil 21c des Auslaßkanals 21 wird in den dargestellten Beispielen durch eine zentrale Bohrung in der Kolbenstange 26 und durch ein Auslaßröhrchen 28, 28a bzw. 28b gebildet. Der durch die zentrale Sackbohrung in der Kolbenstange 26 gebildete äußere, offene Teil 21c des Auslaßkanals 21 steht über eine Querbohrung 29 in der Kolbenstange 26 mit dem im Inneren des Führungsröhrchens 23b gebildeten, kanalartig aufgeweiteten Teil 21a des Auslaßkanals 21 in Verbindung.

Die Querbohrung 29 befindet sich in einem Bereich 26c vergrößerten Durchmessers der Kolbenstange 26. Dieser Bereich 26c erstreckt sich von dem Dichtungsbund 27 auf den Kolben 13 zu, bis zu einer konischen Schulter 26b, von der sich ein Abschnitt 26a geringeren Durchmessers der Kolbenstange 26 bis zu Kolben 13 erstreckt. Der Außendurchmesser der Kolbenstange 26 ist im Bereich 26c derart, daß sie mit dem Bereich 26c abdichtend in die Verengung 21b des Auslaßkanals 21 hineinpaßt, während der mit geringerem Außendurchmesser ausgebildete beschnitt 26a der Kolbenstange 26 in der Verengung 21b noch einen von der Pumpen- und Dosierkammer 12 in den kammerartig aufgeweiteten Teil 21a des Auslaßkanals 21 führenden ringförmigen Durchlaß innerhalb der Verengung 21b freiläßt.

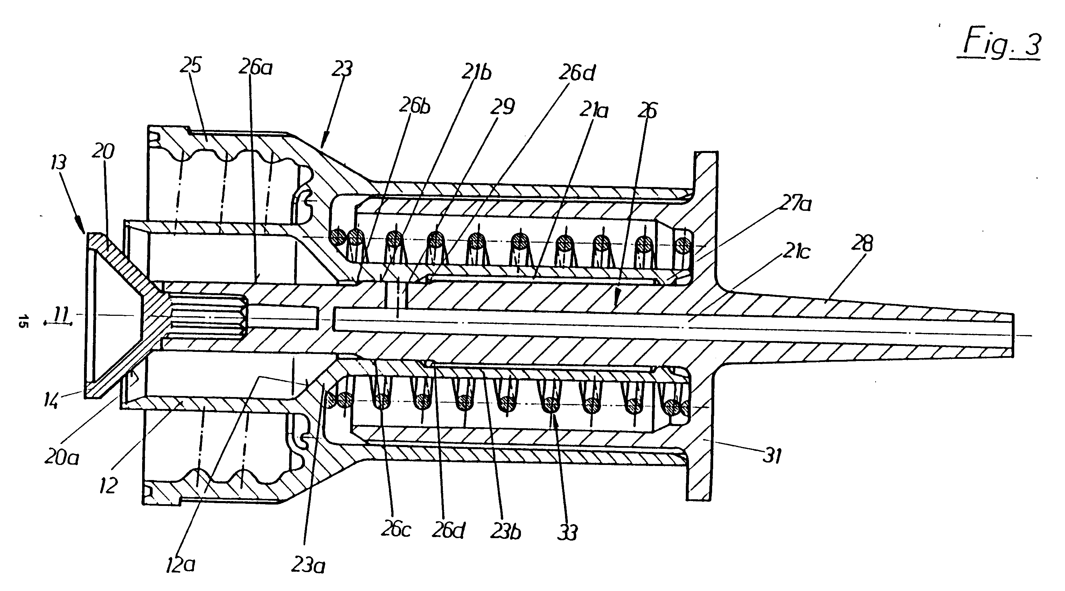

Im Beispiel der Figur 3 ist eine Abwandlung dahingehend gegenüber dem Beispiel nach Figur I und 2 getroffen, daß die Kolbenstange 26 als Abschluß für ihren Bereich 26c größeren Durchmessers nach dem freien Kolbenstangenende hin lediglich eine konische Schulter 26d aufweist, während der Abschnitt 26a geringeren Durchmessers und die zwischen dem Bereich größeren Durchmessers 26c und dem Abschnitt geringeren Durchmessers 26a gebildete konische Schulter 26b in gleicher Weise wie im Beispiel der Figuren 1 und 2 vorgesehen sind. Die Abdichtung des im Inneren des Führungsröhrchens 23b gebildeten aufgeweiteten Teiles 21a des Auslaßkanals 21 wird in diesem Beispiel durch einen die Kolbenstange umgreifenden Dichtungswulst 27a gebildet, der am freien Endbereich des Führungsröhrchens 23b an dessen Innenseite angeformt ist.

Im Beispiel der Figur 4 ist eine weitere Abwandung dahingehend vorgesehen, daß das am freien Ende der Kolbenstange 26 angeformte Betätigungselement 31a in Art einer Fingerauflage ausgebildet ist und eine Abschrägung 31b aufweist, in die mit etwa 45° Neigung zur Achse der Kolbenstange 26 eine Auslaßbohrung 31c angebracht und ein Auslaßröhrchen 28a schräg eingesetzt ist. Im übrigen kann die Kolbenstange 26 in gleicher Weise ausgebildet sein wie im Beispiel der Figuren 1 und 2 oder wie im Beispiel der Figur 3.

In allen drei dargestellten Ausführungsbeispielen ist das Betätigungselement 31 bzw. 31a mit einer sich koaxial zur Kolbenstange 28 nach deren den Kolben tragenen Ende hin erstreckenden Abdeckwand 34 versehen, die einstückig an die vom Betätigungselement 31 bzw. 31a und der Kolbenstange 26 gebildete Einheit angeformt ist. Diese Abdeckwand 34 trägt an der Außenseite Führungsrippen 34a und bildet mit der Kolbenstange 26 einen zylindrischen Ringraum 34b zur Aufnahme einer zur Betätigungseinrichtung 16 gehörenden Rückstellfeder 33. Am Pumpengehäuse 23 ist in den dargestellten Beispielen eine koaxial zum Führungsröhrchen 23b angeordnete zylindrische Abdeckwand 35 gebildet, die mit dem Führungsröhrchen 23b einen ringförmigen Aufnahmeraum 35a für die Rückstellfeder 33 und zur Aufnahme der Abdeckwand 34 bildet. Die beiden Abdeckwände 34 und 35 sind dabei derart aufeinander abgestimmt, daß sie teleskopartig ineinanderpassen und die Abdeckwand 34 mit ihren Führungsrippen 34a an der Innenfläche der Führungswand 35 gleitend geführt ist. Auf diese Weise wird die Führung der Kolbenstange 26 im Führungsröhrchen 23b auch noch durch die Teleskopführung an den Abdeckwänden 34 und 35 unterstützt und ergänzt, wobei in erster Linie eine sichere Abdeckung der Rückstellfeder 33 in jeglicher Stellung der Kolbenstange 26 bezüglich des Pumpengehäuses 23 sichergestellt ist.

Zum Entnehmen einer abgemessenen Menge von fließfähigem Gut aus einem die Dosierpumpe 10 tragenden Behälter ist zunächst der Behälter mit der Dosierpumpe 10 so anzurodnen, daß die Dosierpumpe 10 mit ihrer Achse etwa senkrecht nach unten gestellt ist, zumindest aber das Auslaßröhrchen 28 bzw. 28a nach unten gerichtet ist. Es wird dann der Kolben 13 über die Kolbenstange 26 mit dem Betäigungselement 31 bzw. 31a gegen die Wirkung der Rückstellfeder 33 eingedrückt, bis der Kolben vollständig aus der Pumpen- und Dosierkammer 12 herausgeschoben ist. Während dieser axialen Verschiebungsbewegung saugt der Kolben 13 Luft über den Auslaßkanal 21 an. Hierbei wird im Auslaßkanal 21 vorhandene restliche Flüssigkeit in die Pumpen- und Dosierkammer zurückgezogen und die für den Druckausgleich erforderliche Luft in das Behälterinnere angesaugt. Dieser Vorgang wird beendet, sobald der Bereich 26c größeren Durchmessers an der Kolbenstange 26 an den Anfang der Verengung 21b gelangt. Die gegenseitige Abstimmung der Elemente ist derart getroffen, daß in diesem Augenblick der Kolbenring 14 in den konisch erweiterten Innenflächenbereich 19 der Pumpen- und Dosierkammer gelangt. Beim weiteren Eindrücken der Kolbenstange 26 wird dann der Kolben 13 aus der Pumpen- und Dosierkammer 12 herausbewegt und der Bereich 26c größeren Durchmessers der Kolbenstange 26 weiter in die Verengung 21b hineingeschoben. In der tiefsten Eindrückstellung bzw. der Ausgabe- und Dosier-Bereitschaftsstellung befindet sich der Bereich 26c größeren Durchmessers der Kolbenstange 26 praktisch vollständig innerhalb der Verengung 21b und erstreckt sich bis nahe an den Übergang der Verengung 21b zur Pumpen- und Dosierkammer 12, während der Kolben 13 mit seiner kegelstumpfförmigen Stirnfläche 20a bis nahe an die Stirnseite der Pumpen- und Dosierkammer 12 gelangt ist. Hierdurch liegt die Stirnseite 17 der Pumpen- und Dosierkammer 12 (abgesehen von der Kolbenstange 26) gegenüber dem Innenraum 11 des Behälters frei. Die während des Einschiebens der Kolbenstange 26 von ihrer Ruhestellung (Figur 1) in die Ausgabe- und Dosier-Bereitschaftsstellung (Figur 2) in das Innere der Pumpen- und Dosierkammer 12 gelangte Luft wird an der konischen Stirnfläche 20a des Kolbens 13 vollständig und glatt in das Behälterinnere 11 gelenkt, so daß das abzumessende Gut ungehindert in die Pumpen- und Dosierkammer eintreten und diese vollständig füllen kann. Diese Wirkung wird noch unterstützt durch den konisch aufgeweiteten Innenflächenbereich 19 am Stirnrand 18 der Pumpen- und Dosierkammer 12.

Im Beispiel der Figur 5 wird der Benutzer evtl. sofort oder spätestens zum Einleiten des Ausgabevorganges den Behälter mit der Dosierpumpe in eine solche Stellung bewegen, in der das Ausgaberöhrchen 28a nach unten und die Kolbenstange 26 sowie die Pumpen- und Dosierkammer schräg nach oben gerichtet sind. In Verbindung mit der kegelstumpfförmigen Stirnfläche 20a des Kolbens 13 wird durch diese Schrägstellung der Kolbenstange 26 und der Pumpen- und.Dosierkammer 12 eine nochmals verbesserte restlose Abgabe der Luft aus der Pumpen- und Dosierkammer 12 erreicht.

Zum Einleiten der Ausgabe einer dosierten Gutmenge gibt der Benutzer das Betätigungselement 31 bzw. 31a entweder vollständig oder mit einem oder mehreren Fingern gebremst für die Rückbewegung frei. Die dadurch ermöglichte Zurückbewegung der Kolbenstange 26 und des Kolbens 13 aus der Ausgabe- und Dosier-Bereitschaftsstellung in die Ruhestellung erfolgt durch die Wirkung der Rückstellfeder. Hierbei tritt zunächst der Kolben 13 mit seinem Kolbenring 14 über die ringförmige aufgeweitete Innenfläche 19, so daß im stirnseitigen Öffnungsbereich der Pumpen- und Dosierkammer 12 befindliches überschüssiges Gut noch an dem Kolbenring 14 vorbei in den Innenraum 11 des Behälters zurückströmen kann. Sobald der Kolbenring 14 den Übergangsbereich von der konischen Fläche 19 zur zylindrischen Innenfläche 15 der Pumpen- und Dosierkammer 12 erreicht, ist diese Nachdosierung abgeschlossen und die erfaßte Menge von fließfähigem Gut genau an das Volumen der Pumpen- und Dosierkammer 12 angepaßt. Bei der weiteren Rückwärtsbewegung gibt der Bereich 26c größeren Durchmessers der Kolbenstange 26 die Verengung 21b frei. Der Kolben drückt jetzt das in der Pumpen- und Dosierkammer 12 eingefangene Gut durch die Verengung 21b, den kammerartig aufgeweiteten Teil 21a und durch das Auslaßröhrchen 28 bzw. 28a nach außen.

### Bezugszeichenliste

- 10: Dosierpumpe
- 11: Behälterinneres
- 11a: Behältergewinde
- 12: Pumpen- und Dosierkammer
- 13: Kolben
- 14: Kolbenring
- 15: innere Umfangsfläche
- 16: Betätigungseinrichtung
- 17: Stirnseite
- 18: Stirnrand
- 19: Innenflächenbereich
- 20: Stirnwand des Kolben 13
- 20a: Stirnfläche des Kolbens 13
- 21: Auslaßkanal
- 21a: aufgeweiteter Teil
- 21b: Verengung
- 21c: offener Teil
- 22: Stirnwand
- 22a: Bodenfläche
- 23: Pumpengehäuse
- 23a: Zwischenboden
- 23b: Führungsröhrchen
- 24: Dichtungslippe
- 24a: Anpreßring
- 25: Schraubring
- 26: Kolbenstange
- 26a: Abschnitt geringeren Durchmessers
- 26b: konische Schulter
- 26c: Bereich größeren Durchmessers
- 27: Dichtungsbund
- 27a: Dichtungswulst
- 28: Auslaßröhrchen
- 28a: Auslaßröhrchen
- 29: Querbohrung
- 31: Betätigungselement
- 31a: Finterauflagekopf
- 31b: schräger Endabschnitt von 31a
- 32: Schulter
- 33: Rückstellfeder
- 34: Abdeckwand
- 34a: Führungsrippen
- 34b: zylindrischer Ringraum
- 35: Abdeckwand
- 35a: Abdeckwand

## Patentansprüche

1. Vorrichtung zum Ausgeben einer dosierten Menge von fliesfähigem Gut, insbesondere flüssigem Medikament aus einem Behälter, die zugleich einen am Behälterauslaß angebrachten oder anbringbaren Behälterverschluß bildet und in Art einer Dosierpumpe (10) mit einer Dosierkammer (12), die eine nach dem Behälterinneren offene Stirnseite (17) aufweist mit einem an seinem Umfang abgedichtet in der Dosierkammer (12) und aus deren offener Stirnseite (17) heraus bis in das Behälterinnere bewegbaren Kolben (13) und mit einer sich von außen über die Kolbenstange (26) zum Kolben (13) erstreckenden Betätigungseinrichtung (16) zum Bewegen des Kolbens (13) ausgebildet ist, wobei der Auslaßkanal (21) für das dosiert auszugebende Gut an seiner Einmündung am Boden der Dosierkammer (12) einen Durchlaß für die Kolbenstange (26) bildet und wobei Teile der Kolbenstange (26) eine Verschlußeinrichtung bilden, die den Auslaßkanal (21) schließt, wenn der Kolben (13) die Dosierkammer (12) verläßt, und öffnet, wenn der Kolben wieder in die Dosierkammer (12) eintritt,
dadurch gekennzeichnet, daß
die dem Boden der Dosierkammer (12) zugewandte Stirnfläche (20a) des Kolbenkörpers der Mantelfläche eines Kegelstumpfes mit einem Kegelwinkel (α) in der Größenordnung von 90°entspricht, der sich nach der Boden der Dosierkammer (12) hin verjüngt bis seine Querschnittsfläche mit derjenigen der Kolbenstange (26) zusammenfällt, während die Bodenfläche (12a) der Dosierkammer (12) zur Stirnfläche (20a) des Kolbenkörpers abdichtend zusammenpassende Konizität aufweist und mittig zur Einmündung des Auslaßkanals (21) führt, wobei diese Einmündung des Auslaßkanals (21) eine größere Querschnittsfläche als die Kolbenstange (26) im Bereich der Kolbenstirnfläche (20a) aufweist, daß die Betätigungseinrichtung eine Rückstellfeder (33) enthält, die den Kolben (13) bei Nichtbetätigung in eine Ruheposition innerhalb der Dosierkammer (12) zieht, bei der die konische Stirnfläche (20a) des Kolbens (13) und die Bodenfläche (12a) der Dosierkammer (12) in dichtendem Eingriff aufeinander liegen, und daß die Betätigungseinrichtung dazu ausgebildet ist, den Kolbenkörper (13) zum Öffnen der Dosierkammer (12) zum Behälterinneren im wesentlichen um die Höhe des mit seiner dem Boden der Dosierkammer (12) zugewandten Stirnfläche (10a) gebildeten Kegelstumpfes aus der offenen Stirnseite (17) der Dosierkammer (12) heraus zu bewegen.

2. Vorrichtung nach Anspruch 1, dadurch gekennzeichnet, daß die kegelstumpfförmige Stirnseite (20a) des Kolbens (13) mit einem Kegelwinkel (α) in der Größe von 90° ausgebildet ist.

3. Vorrichtung nach einem der Ansprüche 1 oder 2, dadurch gekennzeichnet, daß der Kolben (13) in Art eines Hohlkolbens mit kegelstumpfförmiger Stirnwand (20) und sich an deren Außenumfang nach hinten anschließendem, zylindrischem Kolbenring (14) ausgebildet ist.

4. Vorrichtung nach einem der Ansprüche 1 bis 3, dadurch gekennzeichnet, daß der Auslaßkanal (21) in seinem die Kolbenstange (26) konzentrisch umgebenden Einmündungsabschnitt zur Dosierkammer (12) mit einer Verengung (21b) ausgebildet ist, während die Kolbenstange in einem solchen Abstand vom Kolbenkörper mit einer in die Verengung (21b) abdichtend passenden Verdickung (26c) versehen ist, daß beim Bewegen des Kolbens aus der offenen Stirnseite (17) der Dosierkammer (12) heraus sich diese Verdickung (26c) in die Verengung (21b) des Auslaßkanals (21) hinein bewegt.

5. Vorrichtung nach einem der Ansprüche 1 bis 4, dadurch gekennzeichnet, daß ein Pumpengehäuse (23) vorgesehen ist, das innerhalb eines rohrförmigen Teiles die Kolbenstange (26) abdichtend führt und einen sich an eine Verengung (21b) im Einmündungsbereich zur Dosierkammer (12) anschließenden und die Kolbenstange (26) ringförmig umgebenden, inneren Abschnitt (21d) des Auslaßkanals (21) mit Abdichtung nach außen enthält, wobei die Kolbenstange (26) zur Bildung eines äußeren Abschnittes (21c) des Auslaßkanals (21) mit einer nach außen offenen zentralen Bohrung ausgebildet ist, sowie an ihrer mit der Verengung (21b) des Auslaßkanals (21) zusammenwirkenden Verdickung eine den inneren Abschnitt (21a) und den äußeren Abschnitt (21c) des Auslaßkanals (21) miteinander verbindende Querbohrung (29) aufweist, derart, daß diese Querbohrung (29) bei nach dem Behälterinneren geöffneter Dosierkammer (12) und in die Verengung (21b) des Auslaßkanals (21) eingeführter Verdickung (26c) der Kolbenstange (26) verschlossen ist.

6. Vorrichtung nach Anspruch 5, dadurch gekennzeichnet, daß die Abdichtung der Kolbenstange (26) und des inneren Abschnittes (21a) des Auslaßkanals (21) nach außen durch eine zweite Verdickung der Kolbenstange (26) oder durch einen an die Kolbenstange (26) angeformten äußeren Ringbund (27) gebildet ist.

7. Vorrichtung nach Anspruch 5, dadurch gekennzeichnet, daß der röhrförmige Teil des Pumpengehäuses (23) aus nachgiebigem Kunststoff besteht und als Abdichtung der Kolbenstange (26) und des inneren Abschnittes (21a) des Auslaßkanals (21) an seinem freien Ende einen auf die Außenfläche der Kolbenstange (26) greifenden inneren Dichtungsbund (27a) aufweist.

8. Vorrichtung nach einem der Ansprüche 1 bis 7, dadurch gekennzeichnet, daß ein die Dosierkammer (12) und einen die Kolbenstange (26) abdichtend führenden Abschnitt (21a) des Auslaßkanals (21) aufnehmendes Pumpengehäuse (23) vorgesehen ist und die Betätigungseinrichtung (16) zum Bewegen des Kolbens (13) ein auf der Kolbenstange (26) angebrachtes Betätigungselement (31, 31a) und eine zwischen diesem Betätigungselement (31, 31a) und dem Pumpengehäuse (23) eingesetzte, die Kolbenstange (26) axial aus dem Pumpengehäuse (23) herausziehende Schrauben-Druckfeder als die Rückstellfeder (33) enthält.

9. Vorrichtung nach Anspruch 8, dadurch gekennzeichnet, daß am Pumpengehäuse (23) und an der Kolbenstange (26) teleskopisch zueinander geführte Abdeckwände (34, 35) vorgesehen sind, innerhalb derer die Rückstellfeder (33) in einen ringförmigen Zwischenraum (34a, 35a) eingesetzt ist.

10. Vorrichtung nach Anspruch 9, dadurch gekennzeichnet, daß die eine Abdeckwand (34a) einstückig an das an der Kolbenstange (26) vorgesehene Betätigungselement (31, 31a) und die andere Abdeckwand (35) einstückig an das Pumpengehäuse (23) angeformt sind.

11. Vorrichtung nach einem der Ansprüche 1 bis 10, dadurch gekennzeichnet, daß die Betätigungseinrichtung (16) zum Bewegen des Kolbens (13) ein am freien Ende der Kolbenstange (26) angebrachtes, plattenförmiges Betätigungselement (31) aufweist, über das hinaus ein Ausgaberöhrchen (28) in Verlängerung der Kolbenstange (26) axial vorsteht.

12. Vorrichtung nach einem der Ansprüche 1 bis 10, dadurch gekennzeichnet, daß die Betätigungseinrichtung (16) zum Bewegen des Kolbens (13) einen am freien Ende der Kolbenstange (26) angebrachen Fingerauflagekopf (31a) als Betätigungselement aufweist, in welchem ein schräggestellter Endabschnitt (31b) des Auslaßkanals gebildet ist.

13. Vorrichtung nach einem der Ansprüche 1 bis 12, gekennzeichnet durch den Aufbau aus drei spritzgegossenen Kunststoffteilen und einer Rückstellfeder (33), beispielsweise aus Stahl, nämlich:
einem Pumpengehäuse (23) mit angeformter Dosierkammer (12) sowie angeformtem Führungsröhrchen (23b),
einer Kolbenstange (26) mit angeformtem Betätigungselement (31, 31a) und einem an die Kolbenstange anzusetzenden Kolbenkörper (13),
wobei die Rückstellfeder (33) eine Schrauben-Druckfeder und zwischen dem Pumpengehäuse (23) und dem Betätigungselement (31, 31a) der Kolbenstange (26) eingesetzt ist.

## Claims

1. Device for dispensing doses of free-flowing materials, in particular fluid medicaments, from a container, the said device forming likewise a seal for the container mounted or mountable at the outlet thereof and being developed in the style of a dosing pump (10) and having
a dosing chamber (12), comprising a front side being opened towards the interior of the container,
a plunger (13) being movable in the dosing chamber (12) whilst its circumference is kept fluid-tight and movable out of the open front side (17) thereof as far as into the interior of a container, and
an operating assembly (16) extending from the outside via the plunger rod (26) to the plunger (13) in order to move the plunger (13),
whereas the outlet channel (21) for the matter to be dispensed in doses forms a passageway for the plunger rod (26) and its joint with the bottom of the dosing chamber (12) and whereas portions of the plunger rod (26) form a sealing device which seals the outlet channel (21) in the event that the plunger (13) leaves the dosing chamber, and opens the outlet channel in the event that the plunger reenters the dosing chamber (12),
characterized in that
the end face (20a) of the plunger body facing the bottom of the dosing chamber (12) agrees with the lateral area of a truncated cone that has a cone angle (α) in the order of magnitude of 90° and tapers towards the bottom of the dosing chamber (12) until its area of cross section meets that of the plunger rod (26) whilst the bottom area (12a) of the dosing chamber (12) reveals a conical form in order to tightly match with the end face (20a) of the plunger body and extends centrically to the joint with the outlet channel (21), and whereas the said joint with the outlet channel (21) has a greater area of cross section than the plunger rod (26) in the region of the end face of the plunger (20a),
in that the operating assembly comprises a readjusting spring (33) which, the device being non-operated, draws the plunger (13) to a position of rest within the dosing chamber (12) wherein the conical end face (20a) of the plunger (13) and the bottom face (12a) or the dosing chamber (12) are superposed with tight engagement, and in that
for the opening of the dosing chamber (12) towards the interior of the container, the operating assembly is developed to move the plunger body (13) out of the open frontside (17) of the dosing chamber, essentially by the altitude of the trancated cone formed by the end face (20a) facing the bottom of the dosing chamber.

2. Device according to claim 1, characterized in that the truncated cone-shaped front side (20a) of the plunger (13) is developed with a cone angle (α) of 90°.

3. Device according to one of claims 1 or 2, characterized in that the plunger (13) is developed in the style of a hollow plunger having a truncated cone-shaped end face (20) and a cylindric plunger ring (14) being backwards adjacent to the outer circumference of the end face.

4. Device according to anyone of claims 1 to 3, characterized in that, at the junction domain concentrically surrounding the plunger rod (26) towards the dosing chamber, the outlet channel (21) is developed with a throat (21b), whilst the plunger rod is provided with an enlargement (26c) tightly fitting into the throat (21b) at such a distance from the plunger body, that, in the event that the plunger moves out of the open front side (17) of the dosing chamber (12), the said enlargement (26c) moves into the throat (21b) of the outlet channel (21).

5. Device according to anyone of claims 1 to 4, characterized in that a pump housing (23) is provided tightly guiding the plunger rod (26) within a tubiform part and containing an outwardly sealing inner section (21d) adjacent to a throat (21b) in the junction domain towards the dosing chamber (12) and surrounding the plunger rod (26) like a ring, whereas, in order to form an outer section (21c) of the outlet channel (21), the plunger rod (26) is developed with an outwardly open centric bore and the said plunger rod (26) comprising a cross hole connecting the inner section (21a) and the outer section (21c) of the outlet channel (21) at the enlargement engaging with the throat (21b) of the outlet channel (21), thus that, in the event that the dosing chamber (12) is opened towards the interior of the container and the throat (21b) of the outlet channel (21) is inserted into the enlargement (26c) of the plunger rod (26), the said cross hole (29) is sealed.

6. Device according to claim 5, characterized in that the outward sealing of the plunger rod (26) and of the inner section (21a) of the outlet channel (21) is formed by means of the second enlargement of the plunger rod (26) or by means of an outer ring collar (27) applied at the plunger rod (26).

7. Device according to claim 5, characterized in that the tubiform portion of the pump housing (23) is made of non-rigid plastics and comprises an inner sealing collar (27a) engaging at the outer surface of the plunger rod (26) as the sealing of the plunger rod (26) and the inner section (21a) of the outlet channel (21) at its free end.

8. Device accoding to anyone of claims 1-7, characterized in that a pump housing (23) is provided containing the dosing chamber (12) and a section (21a) of the outlet channel (21) tighly guiding the plunger rod (26), and in that, in order to move the plunger (13), the operating device contains an operating element (31, 31a) mounted on the plunger rod (26) and a helical compression spring as the readjusting spring being inserted between the said operating element (31, 31a) and the pump housing (23) and axially removing the plunger rod (26) from the pump housing.

9. Device according to claim 8, characterized in that cover walls (34, 35) are provided at the pump housing (23) and at the plunger rod (26) telescopically guided one to another, wherein the readjusting spring (33) is inserted into an annular interstice (34a, 35a).

10. Device according to claim 9, characterized in that the one cover wall (34a) is applied to the operating element (31, 31a) provided at the plunger rod (26) in one piece and that the other cover wall (35) is applied in one piece at the pump housing (23).

11. Device according to anyone of claims 1 to 10, characterized in that the operating device for moving the plunger (13) comprises a plate-shaped operating element (31) mounted at the free end of the plunger rod (26) beyond which a dispensing tube (28) is projecting thus extending the plunger rod (26).

12. Device according to anyone to claims 1 to 10, characterized in that the operating device (16) for moving the plunger (13) comprises a finger support head (31a) as an operating element mounted at the free end of the plunger rod (26) in which finger support head a cocked end portion (31b) of the outlet channel is formed.

13. Device according to one of claims 1 to 12, characterized by the assembly of three injection molded parts of plastics and of a readjusting spring (33) being made of steel by way of example, namely:
of a pump housing (23) with an applied dosing chamber (12) as well as an applied guiding tube (23b),
of a plunger rod (26) with an applied operating element (31, 31a) and
of a plunger body (13) to be attached to the plunger rod,
the readjusting spring (33) being a helical compression spring and being inserted between the pump housing (23) and the operating element (31, 31a) of the plunger rod (26).

## Revendications

1. Distributeur-doseur de fluides, notamment de médicaments fluides contenus dans des récipients, formant à la fois un obturateur du récipient placé ou placeable à la sortie du récipient et développé à la façon d'un pompe de dosage (10), ledit distributeur-doseur montrant
une chambre de dosage (12) présantant un côté frontal (17) ouvert vers l'intérieur du récipient,
un piston (13) que l'on peut agiter dans la chambre de dosage (12) tandis qu'il est obturé le long de sa circonférence et du côté frontal ouvert (17) jusqu'à l'intérieur du récipient, et un actionneur (16) allant de l'extérieur sur le tige de piston (26) au piston (13) pour l'agitation du piston (13),
la conduite de sortie (21) pour le matériau dosé qu'il faut distribuer formant un passage pour le tige de piston (26) à son embouchure au fond de la chambre de dosage (12), et des éléments du tige de piston (26) formant un obturateur qui ferme la conduite de sortie (21) lorsque le piston (13) quitte la chambre de dosage (12) et qui ouvrit la conduite de sortie (21) lorsque le piston rentre dans la chambre de dosage (12),
caractérisé en ce que
la face du corps de piston (20a) , qui est exposée au fond de la chambre de dosage (12), est conforme à la surface latéral d'un cône tronqué à un angle au sommet du cône (α) dans l'ordre de grandeur de 90°, ledit cône tronqué s'effilant vers le fond de la chambre de dosage (12) jusque son aire de la section coïncide avec celle du tige de piston (26) tandis que l'aire du fond (12a) de la chambre de dosage (12) est développée coniquement et s'étende centriquement à l'embouchure de la conduite de sortie (21) pour s'adapter étanchement à la face (20a) du corps du piston,
ladite embouchure de la conduite de sortie (21) présentant une aire de la section plus grande que le tige du piston (26) dans le domaine de la face du piston (20a),
en ce que l'actionneur comporte un ressort de rappel (33) qui, sans mise en action, tire le piston (13) au-dedans de la chambre de dosage (12) à une position de repos où la face conique (20a) du piston (13) et l'aire du fond (12a) de la chambre de dosage (12) sont superposées à engrènement obturant, et en ce que, pour ouvrir la chambre de dosage (12) vers l'intérieur du récipient, l'actionneur est développé pour faire sortir le corps de piston (13) de la face ouverte (17) de la chambre de dosage (12), essentiellement de la hauteur du cône tronqué qui est formé de la face (20a) du corps de piston (13) exposée au fond de la chambre de dosage (12).

2. Distributeur-doseur suivant la revendication 1, caractérisé en ce que la face tronconique (20a) du piston (13) est développée avec un angle au sommet du cône (a) de la grandeur de 90°.

3. Distributeur-doseur suivant une des revendications 1 ou 2, caractérisé en ce que le piston (13) est développé à la façon d'un piston creux ayant une face tronconique (20) et un segment de piston cylindrique (14) contigu au périmètre extérieur sur le derrière.

4. Distributeur-doseur suivant une des revendications 1 à 3, caractérisé en ce que la conduite de sortie (21) est développée avec un pertuis (21b) à son domaine d'embouchure entourant le tige de piston (26) concentriquement et menant à la chambre de dosage (12), tendis que l'on a pourvu le tige de piston avec un épaississement (26c) qui va étanchement au pertuis (21b) à une telle distance du corps de piston que, en faisant le piston sortir de la face (17) de la chambre de dosage (12), ledit épaississement (26c) entre dans le pertuis (21b) de la conduite de sortie (21).

5. Distributeur-doseur suivant une des revendications 1 à 4, caractérisé en ce que l'on a pourvu un carter de pompe (23) guidant étanchement le tige de piston (26) au-dedans d'une partie tubulaire et comportant un domaine intérieur (21d) de la conduite de sortie (21) avec étanchement vers l'extérieur, ledit domaine intérieur étant contigu à un pertuis (21b) dans le domaine d'embouchure menant à la chambre de dosage (12) et entourant le tige de piston (26) à la manière d'un anneau, tandis que, pour la formation d'un domaine extérieur (21c) de la conduite de sortie (21), le tige de piston (26) est développé avec un trou de forage centrique et ouvert vers l'extérieur, et que ledit tige de piston présente un forage transversal (29) à son épaississement concourant avec le pertuis (21b) de la conduite de sortie (21), ledit forage transversal connectant le domaine intérieur (21a) et le domaine extérieur (21c) de la conduite de sortie (21) de telle façon que, la chambre de dosage (12) étant ouverte vers l'intérieur du récipient et l'épaississement (26c) du tige de piston étant introduit dans le pertuis (21b) de la conduite de sortie (21), ledit forage transversal (29) est fermé.

6. Distributeur-doseur suivant la revendication 5, caractérisé en ce que l'étanchement du tige de piston (26) et du domaine intérieur (21a) de la conduite de sortie (21) vers l'extérieur est formé par un deuxième épaississement du tige de piston 2 ou par un collet annulaire extérieur (27) ajouté au tige de piston (26).

7. Distributeur-doseur suivant la revendication 5, caractérisé en ce que, comme étanchement du tige de piston (26) et du domaine intérieur (21a) de la conduite de sortie (21), la partie tubulaire du carter de pompe (23) se compose d'une matière plastique molle et présente à son bout libre un collet d'étanchement intérieur (27a) agissant sur la surface extérieur du tige de piston (26).

8. Distributeur-doseur suivant une des revendications 1 à 7, caractérisé en ce que l'on a prévu un carter de pompe (23) contenant la chambre de dosage (12) et un domaine (21a) de la conduite de sortie ( 21) guidant le tige de piston (26) avec d'étanchéification, et que l'actionneur (16) pour l'agitation du piston (13) comporte un élément d'actionnement (31, 31a) et, en tant que ressort de rappel, un ressort cylindrique de compression qui est inséré entre ledit élément d'actionnement (31, 31a) et le carter de pompe (23) et qui enlève le tige de piston (26) axialement du carter de pompe (23).

9. Distributeur-doseur suivant la revendication 8, caractérisé en ce que, au carter de pompe (23) et au tige de piston (26), on a prévu des parois de protection (34, 35) d'un guidage téléscopique au-dedans desquelles on a inséré le ressort de rappel (33) dans un espace intermédiaire annulaire (34a, 35a).

10. Distributeur-doseur suivant la revendication 9, caractérisé en ce que l'une des parois de protection (34a) est ajouté d'un seul tenant à l'élément d'actionnement (31, 31a) prévu au tige de piston (26), et l'autre paroi de protection (35) d'un seul tenant au carter de pompe (23).

11. Distributeur-doseur suivant une des revendications 1 à 10, caractérisé en ce que l'actionneur (16) pour l'agitation du piston (13) présente un élément d'actionnement en forme de plaque (31) placé au bout libre du tige de piston (26) qui est débordé axialement par une tubulure de distribution (28), ainsi prolongeant le tige de piston (26).

12. Distributeur-doseur suivant une des revendications 1 à 10, caractérisé en ce que, comme élément d'actionnement (31b), l'actionneur (16) pour l'agitation du piston (13) présente un appui-doigt (31a), dans quoi on a formé une section finale (31b) de la conduite de sortie.

13. Distributeur-doseur suivant une des revendications 1 à 12, caractérisé par la construction à partir de trois pièces en matière plastique moulées par injection et d'un ressort de rappel (33), par exemple en acier, pour préciser:
d'un carter de pompe (23) avec une chambre de dosage ajoutée (12) et avec des tubulures de guidage (23b) ajoutées, d'un tige de piston (26) avec un élément d'actionnement (31, 31a) ajouté, et
d'un corps de piston (13) qu'il faut ajouter au tige de piston, le ressort de rappel (33) étant un ressort cylindrique de compression inséré entre le carter de pompe (23) et l'élément d'actionnement (31, 31a) du tige de piston (26).
